# EUROPEAN PATENT APPLICATION

(11) **EP 2 690 164 A1**
(43) Date of publication of application: **29.01.2014**
(21) Application number: 12760390.0
(22) Date of filing: 23.03.2012
(51) Int. Cl.: C10M 145/14, C10M 143/10, C10N 20/04, C10N 30/02, C10N 40/25

(54) **VISCOSITY INDEX IMPROVER, LUBRICANT OIL ADDITIVE, AND LUBRICANT OIL COMPOSITION**

(30) Priority: 23.03.2011 JP 2011064151
(71) Applicant: JX Nippon Oil & Energy Corporation, Chiyoda-ku Tokyo 100-8162 (JP)
(72) Inventor: TAKAGI Akira, Tokyo 100-8162 (JP); YAGUCHI Akira, Tokyo 100-8162 (JP); TAGAWA Kazuo, Tokyo 100-8162 (JP); SHIRAHAMA Shinichi, Tokyo 100-8162 (JP)
(74) Representative: Grünecker, Kinkeldey, Stockmair & Schwanhäusser
(86) International application number: PCT/JP2012/057510
(87) International publication number: WO 2012/128350

(57) **Abstract**

A viscosity index improver of the present invention contains a star polymer obtained by a reaction of divinylbenzene with alkyl methacrylate containing stearyl methacrylate, the star polymer having a core part and an arm part, wherein the core part is derived from the divinylbenzene and the ann part is a polymer chain of the alkyl methacrylate. A lubricant oil additive and a lubricant oil composition of the present invention contain the above viscosity index improver.

## Description

### Technical Field

The present invention relates to a viscosity index improver, a lubricant oil additive, and a lubricant oil composition. Specifically, the present invention relates to a viscosity index improver, a lubricant oil additive, and a lubricant oil composition which are useful in the field of a lubricant oil for a fuel-efficient internal combustion engine or the like.

### Background Art

In recent years, improvement in a fuel efficiency characteristic is required for a lubricant oil for an internal combustion engine, regardless of gasoline and a diesel. The required value also becomes stricter year after year, and cannot be utterly achieved in a conventional lubricant oil technique. Development of viscosity index improvers, which have the largest influence on the fuel efficiency characteristic, has been conducted in such a situation. Linear polymethacrylate (also referred to as polymethacrylate, polymethacrylic acid alkyl ester, or PMA) and star polymethacrylate or the like have been developed.

For example, viscosity index improvers for a GTL base oil containing a copolymer containing (meth)acrylic acid alkyl ester having an alkyl group having 1 carbon atom and/or 2 carbon atoms, (meth)acrylic acid alkyl ester having an alkyl group having 12 and/or 13 carbon atoms, (meth)acrylic acid alkyl ester having an alkyl group having 14 and/or 15 carbon atoms, and (meth)acrylic acid alkyl ester having one or more alkyl groups selected from alkyl groups having 16-24 carbon atoms as indispensable structural monomers are disclosed in Patent Literature 1 described below.

(a) A star polymer containing (i) a core portion containing a polyvalent (meth)acrylic monomer, an oligomer or polymer thereof, or a polyvalent divinyl non-acrylic monomer, an oligomer or polymer thereof; and (ii) at least two arms of polymerized (meth)acrylic acid alkyl ester, and (b) a composition containing an oil having a lubricating viscosity, wherein the core portion contains a specific functional group are disclosed in Patent Literature 2 described below. Specifically, a C12-C15/C8 copolymer and a C12-C15/C1 copolymer or the like are shown as examples of the core portion.

### Citation List

### Patent Literature

Patent Literature 1: Japanese Unexamined Patent Application Publication No. 2008-88215
Patent Literature 2: Japanese Unexamined Patent Application Publication No. 2008-518052

### Summary of Invention

### Technical Problem

However, there is still room for improvement in the viscosity index improver disclosed in Patent Literatures 1 and 2 as one capable of being put to practical use. Although a viscosity-temperature characteristic is excellent and an initial fuel efficiency characteristic is good, for example, in the case of the linear polymethacrylate disclosed in Patent Literature 1, shear stability is poor, which causes a problem that the fuel efficiency characteristic during long-term use is reduced. Although the shear stability is excellent in the case of the star polymethacrylate disclosed in Patent Literature 2, an original fuel efficiency characteristic improving effect is not sufficient.

Furthermore, recently, a long drain property has been also required from the viewpoint of the reduction in wastes in addition to the fuel efficiency characteristic. Because the lubricant oil is usually oxidized and deteriorated by the use thereof, which makes it difficult to maintain initial performance, it is questioned that the initial fuel efficiency characteristic is impaired with long-term use. Although this cause relates to the stability of the viscosity index improver to be used, not simple stability but cutting of a polymer caused by receiving shear is questioned. Although it is required that a shear viscosity is reduced in a practical use region while the viscosity grade of SAE is maintained for fuel efficiency, one satisfying the requirement is not yet found.

The present invention has been accomplished in light of these circumstances, and its object is to provide a viscosity index improver having an excellent viscosity-temperature characteristic, shear stability, and oxidation stability and capable of achieving a fuel efficiency characteristic and a long drain property, and a lubricant oil additive and a lubricant oil composition using the viscosity index improver.

### Solution to Problem

In order to solve the above problems, the present invention provides a viscosity index improver according to the following items [1] to [6], a lubricant oil additive according to the following item [7], and a lubricant oil composition according to the following items [8] and [9].
[1] A viscosity index improver containing a star polymer obtained by a reaction of divinylbenzene with alkyl methacrylate containing stearyl methacrylate (also referred to as n-octadecyl methacrylate, stearyl methacrylate, or methacrylic acid n-octadecyl), the star polymer having a core part and an arm part, wherein the core part is derived from the divinylbenzene and the arm part is a polymer chain of the alkyl methacrylate.
[2] The viscosity index improver according to the item [1], wherein a proportion of stearyl methacrylate in the alkyl methacrylate is 40 to 100% by mass based on the total amount of the alkyl methacrylate.
[3] The viscosity index improver according to the item [1] or [2], wherein a proportion of methyl methacrylate in the alkyl methacrylate is 0 to 50% by mass based on the total amount of the alkyl methacrylate.
[4] The viscosity index improver according to any one of the items [1] to [3], wherein a proportion of alkyl methacrylate having an alkyl group having 10 to 16 carbon atoms in the alkyl methacrylate is 0 to 40% by mass based on the total amount of the alkyl methacrylate.
[5] The viscosity index improver according to any one of the items [1] to [4], wherein the arm part has a number average molecular weight of 10,000 to 60,000.
[6] The viscosity index improver according to any one of the items [1] to [5], wherein the star polymer has a number average molecular weight of 50,000 to 1,000,000.
[7] A lubricant oil additive containing the viscosity index improver according to any one of the items [1] to [6].
[8] A lubricant oil composition containing a lubricating base oil and the viscosity index improver according to any one of the items [1] to [6].
[9] The lubricant oil composition according to the item [8], wherein the lubricant oil composition has a HTHS viscosity of 1.4 mPa·s or greater at 150°C and a HTHS viscosity of less than 5.4 mPa·s at 100°C.

### Advantageous Effects of Invention

As described above, the present invention provides a viscosity index improver having an excellent viscosity-temperature characteristic, shear stability, and oxidation stability and capable of achieving a fuel efficiency characteristic and a long drain property, and a lubricant oil additive and a lubricant oil composition using the viscosity index improver.

Furthermore, according to the present invention, the above effect can be obtained, regardless of whether a fuel used for an internal combustion engine is any of gasoline or diesel fuel.

### Description of Embodiments

### Example 1

Hereinafter, preferred embodiments of the present invention will be described in detail.

### [First Embodiment: Viscosity Index Improver]

A viscosity index improver according to a first embodiment of the present invention contains a star polymer obtained by a reaction of divinylbenzene with alkyl methacrylate containing stearyl methacrylate, the star polymer having a core part and an arm part, wherein the core part is derived from the divinylbenzene and the arm part is a polymer chain of the alkyl methacrylate.

The arm part of the star polymer is a polymer chain of the alkyl methacrylate containing stearyl methacrylate based on a vinyl group of the divinylbenzene. A proportion of stearyl methacrylate in the alkyl methacrylate contained in the arm part is preferably 40 to 100% by mass based on the total amount of the alkyl methacrylate, more preferably 45 to 100% by mass, still more preferably 50 to 100% by mass, and particularly preferably 55 to 100% by mass. The proportion of stearyl methacrylate in the above range can achieve a satisfactory balance with higher levels of a viscosity-temperature characteristic, shear stability, and oxidation stability.

From the viewpoint of a fuel efficiency characteristic, the alkyl methacrylate contained in the arm part preferably contains methyl methacrylate, and a proportion of methyl methacrylate in this case is preferably equal to or greater than 20% by mass based on the total amount of the alkyl methacrylate. On the other hand, from the viewpoint of achieving the satisfactory balance with higher levels of solubility, the viscosity-temperature characteristic, the shear stability, and the oxidation stability, the proportion of methyl methacrylate is preferably equal to or less than 50% by mass, more preferably equal to or less than 45% by mass, and still more preferably equal to or less than 43% by mass.

When the alkyl methacrylate contained in the arm part contains methyl methacrylate, the total of the proportions of stearyl methacrylate and methyl methacrylate is preferably 60 to 100% by mass based on the total amount of the alkyl methacrylate, more preferably 70 to 100% by mass, and still more preferably 80 to 100% by mass. Although the shear stability is excellent when the total of the proportions is less than the above lower limit, an original fuel efficiency characteristic improving effect is potentially insufficient.

The alkyl methacrylate contained in the arm part may further contain alkyl methacrylate having an alkyl group having 10 to 16 carbon atoms. Examples of the alkyl methacrylate include undecyl methacrylate, dodecyl methacrylate, tridecyl methacrylate, heptadecyl methacrylate, and hexadecyl methacrylate. In this case, a proportion of an alkyl methacrylate having an alkyl group having 10 to 16 carbon atoms in the alkyl methacrylate is preferably 0 to 40% by mass based on the total amount of the alkyl methacrylate. When the proportion of the alkyl methacrylate having the alkyl group having 10 to 16 carbon atoms is greater than the above upper limit, the solubility of the viscosity index improver to a base oil tends to be reduced.

The number average molecular weight of the arm of the star polymer according to the present embodiment is preferably 10,000 to 60,000, more preferably 12,000 to 50,000, still more preferably 13,000 to 40,000, and most preferably 15,000 to 30,000. When the number average molecular weight of the arm part is less than the above lower limit, the viscosity is excessively increased, which potentially reduces the fuel efficiency characteristic, or when the number average molecular weight is greater than the above upper limit, the shear stability is potentially impaired.

The number average molecular weight of the star polymer is preferably 50,000 to 1,000,000, more preferably 100,000 to 800,000, still more preferably 120,000 to 600,000, and most preferably 150,000 to 400,000. When the number average molecular weight of the star polymer is less than the above lower limit, the addition amount of the viscosity index improver to a lubricating base oil required to obtain a desired effect increases, which potentially reduces the oxidation stability of a lubricant oil, or when the number average molecular weight is greater than the above upper limit, the addition amount decreases, but the shear stability is potentially reduced.

In the star polymer according to the embodiment, the average value of the number of the arm parts contained in a molecule (average arm number) is preferably 4 to 30, more preferably 5 to 25, and still more preferably 6 to 20.

Although a method for synthesizing the star polymer according to the embodiment is not limited, examples of the method include a method for polymerizing polyalkyl methacrylate which is the arm part (the polymer chain of the alkyl methacrylate) utilizing a controlled radical polymerization process, and thereafter reacting the polyalkyl methacrylate with divinylbenzene.

The controlled radical polymerization process includes an atom transfer radical polymerization (ATRP) process, a reversible addition fragmentation chain transfer (RAFT) process, or a nitrogen oxide-mediated polymerization process.

The discussion of the polymer mechanism of ATRP polymerization is shown in reaction scheme 11.1 on page 524, in reaction scheme 11.4 on page 566, in reaction scheme 11.7 on page 571, in reaction scheme 11.8 on page 572, and in reaction scheme 11.9 on page 575 of Matyjaszewski et al.

The discussion of the polymer mechanism of RAFT polymerization is shown in Section 12.4.4 on pages 664-665 of Matyjaszewski et al.

The detailed descriptions of nitrogen oxide-mediated polymerization (Chapter 10, pages 463-522), ATRP (Chapter 11, pages 523-628) and RAFT (Chapter 12, pages 629-690) are shown in "Handbook of Radical Polymerization" (Krzysztof Matyjaszewski and Thomas P. Davis, copyright 2002, published by John Wiley and Sons Inc. (hereinafter referred to as "Matyjaszewski et al")).

The above synthesis can be carried out as a batch operation, a half-batch operation, a continuous process, a feeding process, or a bulk process. This synthesis can be performed in an emulsion, a solution, or a suspension.

In the above synthesis, the average molecular weight of the obtained polymethacrylate or star polymer can be adjusted by changing the amounts of an initiator and the divinylbenzene (DVB) to be used.

The reaction rate to the star polymer using the synthesized arm part is equal to or greater than 70% based on the amount of the polymer reacted with the star polymer, preferably equal to or greater than 80%, and more preferably equal to or greater than 85%. When the reaction rate is low, the arm part is left, which cannot increase the molecular weight.

### <Second Embodiment: Lubricant Oil Additive>

A lubricant oil additive according to a second embodiment of the present invention contains the viscosity index improver according to the above first embodiment.

The lubricant oil additive according to the embodiment may consist entirely of the viscosity index improver according to the above first embodiment, or may be a mixture of the viscosity index improver and other additives.

The examples of the other additives include additives such as viscosity index improvers other than the viscosity index improver according to the above first embodiment, antioxidants, anti-wear agents (or extreme-pressure agents), corrosion inhibitors, rust-preventive agents, viscosity index improvers, pour point depressants, demulsifiers, metal inactivating agents, antifoaming agents, and ashless friction modifiers. These additives can be used singly or in combination of two or more types thereof.

Examples of the viscosity index improvers other than the viscosity index improver according to the above first embodiment include polymethacrylate-based, polyisobutene-based, ethylene-propylene copolymer-based, and styrene-butadiene hydrogenerated copolymer-based viscosity index improvers.

Examples of the antioxidants include phenol-based and amine-based ashless antioxidants, and zinc-based, copper-based, and molybdenum-based metal antioxidants.

Preferred examples of the phenol-based antioxidants include 4,4'-methylenebis(2,6-di-tert-butylphenol), 4,4'-bis(2,6-di-tert-butylphenol), 4,4'-bis(2-methyl-6-tert-butylphenol), 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-isopropylidenebis(2,6-di-tert-butylphenol), 2,2'-methylenebis(4-methyl-6-nonylphenol), 2,2'-isobutylidenebis(4,6-dimethylphenol), 2,2'-methylenebis(4-methyl-6-cyclohexylphenol), 2,6-di-tert-butyl-4-methylphenol, 2,6-di-tert-butyl-4-ethylphenol, 2,4-dimethyl-6-tert-butylphenol, 2,6-di-tert-α-dimethylamino-p-cresol, 2,6-di-tert-butyl-4-(N,N-dimethylaminomethylphenol), 4,4'-thiobis(2-methyl-6-tert-butylphenol), 4,4'-thiobis(3-methyl-6-tert-butylphenol), 2,2'-thiobis(4-methyl-6-tert-butylphenol), bis(3-methyl-4-hydroxy-5-tert-butylbenzyl)sulfide, bis(3,5-di-tert-butyl--4-hydroxybenzyl)sulfide, 2,2'-thio-diethylenebis[3-(3,5-di-tert-butyl-4-hydroxyphenyl)propionate ], tridecyl-3-(3,5-di-tert-butyl-4-hydroxyphenyl)propionate, pentaerythrityl-tetrakis[3-(3,5-di-tert-butyl-4-hydroxyphenyl)propionate ], octyl-3-(3,5-di-tert-butyl-4-hydroxyphenyl)propionate, stearyl 3-(3,5-di-tert-butyl-4-hydroxyphenyl)propionate, octyl-3-(3-methyl-5-di-tert-butyl-4-hydroxyphenyl)propionate. These may be used in a mixture of two or more types thereof.

Examples of the amine-based antioxidants include known amine-based antioxidants generally used as lubricant oils such as aromatic amine compounds, alkyldiphenylamine, alkylnaphthylamine, phenyl-α-naphthylamine, and alkylphenyl-α-naphthylamine.

Examples of the corrosion inhibitors include benzotriazole-based, tolyltriazole-based, thiadiazole-based, or imidazole-based compounds.

Examples of the rust-preventive agents include petroleum sulfonates, alkylbenzene sulfonates, dinonylnaphthalene sulfonates, alkenylsuccinic acid esters, or polyhydric alcohol esters.

Examples of the metal inactivating agents include imidazolines, pyrimidine derivatives, alkylthiadiazoles, mercaptobenzothiazoles, benzotriazole or its derivatives, 1,3,4-thiadiazolepolysulfide, 1,3,4-thiadiazolyl-2,5-bisdialkyl dithiocarbamate, 2-(alkyldithio)benzimidazole, or β-(o-carboxybenzylthio)propionitrile.

Examples of the antifoaming agents include silicone oils, alkenylsuccinic acid derivatives, polyhydroxyaliphatic alcohol and long-chain fatty acid esters, methyl salicylate and o-hydroxybenzyl alcohols, which have kinematic viscosities of 1,000 to 100,000 mm²/s at 25°C.

Optional compounds usually used as the ashless friction modifiers for the lubricant oil can be used as the ashless friction modifiers, and examples of the ashless friction modifiers include ashless friction modifiers such as amine compounds, fatty acid esters, fatty acid amides, fatty acids, aliphatic alcohols, and aliphatic ethers with at least one of alkyl groups or alkenyl groups having 6-30 carbon atoms, particularly straight-chain alkyl groups or straight-chain alkenyl groups having 6-30 carbon atoms in the molecule. Nitrogen-containing compounds, their acid-modified derivatives and the like described in Japanese Unexamined Patent Application Publication No. 2009-286831, and various ashless friction modifiers exemplified in International Patent Publication No. WO2005/037967 can also be used.

When the lubricant oil additive according to the embodiment is a mixture of the viscosity index improver according to the above first embodiment and the other additive, the mixing proportion thereof is not particularly limited, and can be suitably selected according to the objective use.

### [Third Embodiment: Lubricant Oil Composition]

A lubricant oil composition according to a third embodiment of the present invention contains a lubricating base oil and the viscosity index improver according to the above first embodiment. The lubricant oil composition may further contain the other additives exemplified in the description of the above second embodiment.

The lubricating base oil in the embodiment is not particularly limited, and lubricating base oils used for usual lubricant oils can be used. Specifically, mineral oil-based lubricating base oils, synthetic oil-based lubricating base oils, or a mixture prepared by mixing two or more types of lubricating base oils selected from these oils at an optional proportion, or the like can be used.

Specific examples of the mineral oil-based lubricating base oils include base oils refined by subjecting a lubricant oil fraction obtained by vacuum distillation of an atmospheric residue obtained by atmospheric distillation of crude oil to one or more treatments such as solvent deasphalting, solvent extraction, hydrocracking, solvent dewaxing, and hydrorefining, or wax isomerizing mineral oils, base oils produced by a technique for isomerizing GTL wax (gas-to-liquid wax).

Specific examples of the synthetic oil-based lubricant oils include polybutenes or their hydrides; poly-α-olefins such as 1-octene oligomer and 1-decene oligomer or their hydrides; diesters such as ditridecylglutarate, di-2-ethylhexyladipate, diisodecyladipate, ditridecyladipate, and di-2-ethylhexylsebacate; polyol esters such as trimethylolpropanecaprylate, trimethylolpropanepelargonate, pentaerythritol-2-ethylhexanoate, and pentaerythritolpelargonate; and aromatic synthetic oils such as alkylnaphthalenes and alkylbenzenes or their mixtures.

The kinematic viscosity of the lubricating base oil at 100°C is preferably 2.5 to 10.0 mm²/s, more preferably 3.0 to 8.0 mm²/s, and still more preferably 3.5 to 6.0 mm²/s. The viscosity index of the lubricating base oil is preferably 90 to 165, more preferably 100 to 155, and still more preferably 120 to 150.

Furthermore, in order to exhibit the effect of the additive, the saturated component of the base oil obtained by the chromatography analysis is preferably equal to or greater than 80%, more preferably equal to or greater than 85%, still more preferably equal to or greater than 90%, and most preferably equal to or greater than 95%.

The content of the viscosity index improver according to the first embodiment is preferably 0.1 to 20.0% by mass based on the total amount of the lubricant oil composition, more preferably 0.5 to 15.0% by mass, and still more preferably 1.0 to 10.0% by mass. When the content is less than the above lower limit, a sufficient additive effect is not potentially obtained. When the content is greater than the above upper limit, the shear stability is reduced, which potentially impairs the durability of the fuel efficiency.

The kinematic viscosity of the lubricant oil composition according to the embodiment at 100°C is preferably 3.0 to 16.3 mm²/s, more preferably 3.5 to 12.5 mm²/s, and still more preferably 4.0 to 9.3 mm²/s. When the kinematic viscosity at 100°C is less than the above lower limit, insufficient lubricity potentially results, or when the kinematic viscosity is greater than the above upper limit, a necessary low-temperature viscosity and sufficient fuel efficiency performance are not potentially obtained.

The viscosity index of the lubricant oil composition according to the embodiment is preferably 150 to 250, more preferably 160 to 240, and still more preferably 170 to 230. When the viscosity index is less than the above lower limit, it is potentially difficult to improve the fuel efficiency characteristic while maintaining a HTHS viscosity, and it is also potentially difficult to lower the low-temperature viscosity. When the viscosity index is greater than the above upper limit, a low-temperature flow property is impaired, and further problems potentially occur due to solubility of the additives or lack of compatibility with the sealant material.

The HTHS viscosity of the lubricant oil composition according to the embodiment at 150°C is equal to or greater than 1.4 mPa·s, preferably equal to or greater than 1.7 mPa·s, more preferably equal to or greater than 2.0 mPa·s, still more preferably equal to or greater than 2.3 mPa·s, and most preferably equal to or greater than 2.6 mPa·s. The HTHS viscosity of the lubricant oil composition at 100°C is preferably less than 5.4 mPa·s, and more preferably equal to or less than 5.2 mPa·s. The HTHS viscosity at 150°C or 100°C herein designates a high-temperature high-shear viscosity at 150°C or 100°C according to ASTM D4683. When the HTHS viscosity at 150°C or 100°C is greater than the above upper limit, the necessary low-temperature viscosity and sufficient fuel efficiency performance are not potentially obtained, or when the HTHS viscosity is less than the above lower limit, evaporativity is high, and insufficient lubricity potentially results.

The viscosity index improver according to the first embodiment, the lubricant oil additive according to the second embodiment, and the lubricant oil composition according to the third embodiment are not particularly limited in their uses, and can be used in broad fields such as a lubricant oil for an internal combustion engine and a driving system lubricant oil.

Because the viscosity index improver according to the first embodiment, the lubricant oil additive according to the second embodiment, and the lubricant oil composition according to the third embodiment particularly have the excellent viscosity-temperature characteristic, shear stability, and oxidation stability, and can achieve the fuel efficiency characteristic and the long drain property, the viscosity index improver, the lubricant oil additive, and the lubricant oil composition are useful in the field of the lubricant oil for the internal combustion engine. The fuel of the internal combustion engine in this case does not have restrictions on gasoline or diesel fuel.

### Examples

Hereinafter, based on Examples and Comparative Examples, the present invention will be more specifically described, but the present invention will not be limited to Examples below.

### [Example 1]

A mixture of methyl methacrylate and stearyl methacrylate (mixing proportion: methyl methacrylate/stearyl methacrylate = 60/40 (mass ratio)), an AIBN initiator (1 equivalent), cumyl dithiobenzoate (2 equivalents), and an oil were mixed in a container (reaction flask) provided with a nitrogen inlet, a medium-speed machine stirrer, a thermo couple, and a water-cooled chiller under conditions of room temperature and a nitrogen flow rate of 28.3 L/hr. At this time, they were stirred for 20 minutes under a N₂ blanket in order to ensure the mixture. Then, the nitrogen flow rate was reduced to 14.2 L/hr, and the mixture was heated to 90°C for 4 hours. Next, divinylbenzene was added into the container, and the mixture was stirred at 90°C for 12 hours to obtain an objective star polymer (hereinafter, sometimes referred to as PMA1).

For the obtained star polymer, the number average molecular weights of the arm part and the star polymer were measured by Gel Permeation Chromatography (GPC, in terms of polystyrene). The average arm number of the star polymer and the inversion rate to the star polymer were obtained based on the amount of a polymer added to the star polymer. The obtained results are shown in Table 1.

A method for measuring a molecular weight was conducted as follows. The obtained star polymer was dissolved in a THF solvent (tetrahydrofuran) so that the concentration was set to 1% by mass, and the measurement was conducted at a flow rate of 0.5 ml/min and a column temperature of 40°C using THF as a mobile phase and RI (refractive index) as a detector. A retention time of 10000 to 500000 was measured using polystyrene as a commercially available standard reagent for an analytical curve, and was used to determine a molecular weight distribution.

### [Examples 2 and 3, Comparative Examples 1 to 3]

In Examples 2 and 3 and Comparative Examples 1 to 3, star polymers were synthesized in the same manner as in Example 1 except that alkyl methacrylates having compositions shown in Table 1 were used in place of the mixture of methyl methacrylate and stearyl methacrylate in Example 1 (hereinafter, the obtained star polymers are possibly referred to as PMAs 2 to 6).

The number average molecular weight of the arm part, the number average molecular weight of the star polymer, the average arm number of the star polymer, and the inversion rate to the star polymer in each of the obtained star polymers are shown in Table 1.

**[Table 1]**

| | Example 1 | Example 2 | Example 3 | Comparative Example 1 | Comparative Example 2 | [Comparative Example 3 |
|---|---|---|---|---|---|---|
| Star polymer | PMA1 | PMA2 | PMA3 | PMA4 | PMA5 | PMA6 |
| Composition or alkyl methacrylate (% by mass) | | | | | | |
| Methyl methacrylate | 30 | 40 | 45 | 30 | 30 | 30 |
| Lauryl methacrylate | - | - | - | 70 | - | - |
| Palmityl methacrylate | - | - | - | - | 70 | - |
| Stearyl methacrylate | 70 | 60 | 55 | - | - | - |
| Icosyl methacrylate | - | - | - | - | - | 70 |
| Number average molecular weight of arm part | 19,500 | 18,700 | 17,500 | 18,300 | 18,800 | 18,300 |
| Polydispersity | 1.15 | 1.14 | 1.15 | 1.13 | 1.14 | 1.15 |
| Number average molecular weight of star polymer | 180,000 | 182,000 | 168,000 | 186,000 | 192,000 | 178,000 |
| Average arm number | 9 | 10 | 10 | 10 | 10 | 10 |
| Arm inversion rate (% by mass) | 87 | 89 | 88 | 91 | 86 | 82 |

### [Examples 4 to 6, Comparative Examples 4 to 6]

In Examples 4 to 6 and Comparative Examples 4 to 6, a package additive (8% by mass: an ashless dispersant at 3% by mass, a metal-based cleaning agent at 3% by mass, ZDTP at 1% by mass, MoDTC at 0.4% by mass, and an amine-based antioxidant 0.6% by mass) was blended into group III base oils (SK YUBASE-4) as lubricating base oils, and any one of PMAs 1 to 6 was further added so as to satisfy 0W-20 as a standard of an engine oil to obtain lubricant oil compositions. The compositions and various aspects of each of the lubricant oil compositions are shown in Table 2 "Y. S" in Table 2 means yield stress

**[Table 2]**

| | Example 4 | Example 5 | Example 6 | Comparative Example 4 | Comparative Example 5 | Comparative Example 6 |
|---|---|---|---|---|---|---|
| Composition of a lubricant oil composition (% by mass) | | | | | | |
| Lubricating base oil | 88.7 | 88 8 | 88.4 | 88.7 | 88.6 | 87.9 |
| Package additive | 80 | 8.0 | 8.0 | 8.0 | 8.0 | 80 |
| PMA1 | 33 | - | - | - | - | - |
| PMA2 | - | 3.2 | - | - | - | - |
| PMA3 | - | - | 3.6 | - | - | - |
| PMA4 | - | - | - | 3.3 | - | - |
| PMA5 | - | - | - | - | 3.4 | - |
| PMA6 | - | - | - | - | - | 41.1 |
| Appearance | Transparent | Transparent | Cloudy | Cloudy | Transparent | Insoluble |
| Kinematic viscosity at 40°C (mm²/s) | 37.3 | 34.2 | 33.9 | 38.8 | 37.9 | 39 .1 |
| Kinematic viscosity at 100°C (mm²/s) | 8.05 | 745 | 7.3 | 7.7 | 765 | 799 |
| Viscosity index | 197 | 191 | 189 | 173 | 176 | 181 |
| HTHS viscosity at 150°C (mPa·s) | 26 | 26 | 26 | 2 6 | 2.6 | 2.6 |
| HTHS viscosity at 100°C (mPa·s) | 5.3 | 5.2 | 5 1 | 5.8 | 5.7 | 5.8 |
| MRV viscosity (-40°C) | | | | | | |
| Existence or nonexistence of Y S | YS nonexistence | Y.S. nonexistence | Y.S. nonexistence | YS nonexistence | YS nonexistence | Y .S. existence |
| Viscosity, mPa s | 14,000 | 12,800 | 10,300 | >60,000 | 28,000 | (inability to measure) |

### [Supersonic Shear Stability Test]

The shear stability of the lubricant oil composition of Example 4 was evaluated by a SONIC method. A viscosity ratio before and after a test (a value obtained by dividing a kinematic viscosity after the test by a kinematic viscosity before the test) is shown in Table 3.

### [Comparative Example 7]

1,500 parts by mass of toluene were charged in a reaction container provided with a stirrer, a heating device, a chiller, a thermometer, a nitrogen blow-in tube, and a drop tank; the reaction container was controlled to a temperature of 85°C; and the reaction container was subjected to nitrogen substitution for 60 minutes. Next, a mixture of 1700 parts by mass of methyl methacrylate, 1020 parts by mass of methacrylic acid n-dodecyl ester, 255 parts by mass of methacrylic acid 2-methyundecyl ester, 1020 parts by mass of methacrylic acid n-tridecyl ester, 255 parts by mass of methacrylic acid 2-methyldodecyl ester, 1224 parts by mass of methacrylic acid n-tetradecyl ester, 306 parts by mass of methacrylic acid 2-dodecyl ester , 1224 parts by mass of methacrylic acid n-pentadecyl ester, 306 parts by mass of methacrylic acid 2-methyltetradecyl ester, and 830 parts by mass of methacrylic acid n-hexadecyl ester (a total of 8,500 parts by mass), and 4 parts by mass of 2,2'-azobis(2,4-dimethylvaleronitrile) and 17 parts by mass of 2,2'-azobis(2-methylbutyronitrile) as a polymerization initiator were charged in the drop tank, and the solution of the drop tank was dropped at a constant speed for 2 hours at 85°C under a sealed condition to perform a polymerization reaction. Continuously, ageing was performed at 85°C for 2 hours, and toluene was distilled away at a decompression degree of 20 mmHg at 120°C to obtain linear polymethacrylate (hereinafter, possibly referred to as VM1).

Next, lubricant oil compositions shown in Table 3 were prepared using the obtained VMA1 as a viscosity index improver, and the same supersonic shear stability test as that in the above description was conducted. The obtained results are shown in Table 3.

### [Comparative Example 8]

A star polymer (hereinafter, possibly referred to as VM2) was synthesized in the same manner as in Example 1except that a mixture of C₁₂₋₁₅ methacrylate (70% by weight) and 2-ethylhexyl methacrylate (30% by weight) was used in place of the mixture of methyl methacrylate and stearyl methacrylate in Example 1, and Trigonox (trademark)-21 ("T-21") initiator (1 equivalent) was used in place of the AIBN initiator (1 equivalent).

Next, a lubricant oil composition shown in Table 3 was prepared using the obtained VM2 as a viscosity index improver, and the same supersonic shear stability test as that in the above description was conducted. The obtained results are shown in Table 3.

**[Table 3]**

| | Example 4 | Comparative Example 7 | Comparative Example 8 |
|---|---|---|---|
| Type of viscosity index improver | PMA1 | VM1 | VM2 |
| Composition of lubricant oil composition (%) | | | |
| Package additive | 8.0 | 8.0 | 8.0 |
| Viscosity index improver | 3.3 | 2.5 | 3.8 |
| Lubricating base oil | 88.7 | 89.5 | 88.2 |
| Before supersonic shear | | | |
| Kinematic viscosity at 40°C (mm²/s) | 37.3 | 39.9 | 38.5 |
| Kinematic viscosity at 100°C (mm²/s) | 8.05 | 8.48 | 7.98 |
| Viscosity index | 197 | 197 | 186 |
| After supersonic shear | | | |
| Kinematic viscosity at 40°C (mm²/s) | 37.2 | 38.8 | 38.0 |
| Kinematic viscosity at 100°C (mm²/s) | 8.04 | 7.45 | 7.55 |
| Viscosity index | 196 | 162 | 171 |
| Viscosity ratio (40°C) | 1.00 | 0.97 | 0.99 |
| Viscosity ratio (100°C) | 1.00 | 0.88 | 0.95 |
| Viscosity index ratio | 1.00 | 0.82 | 0.92 |

## Claims

1. A viscosity index improver comprising a star polymer obtainable by a reaction of divinylbenzene with alkyl methacrylate containing stearyl methacrylate, the star polymer having a core part and an arm part, wherein the core part is derived from the divinylbenzene and the arm part is a polymer chain of the alkyl methacrylate.

2. The viscosity index improver according to claim 1, wherein a proportion of stearyl methacrylate in the alkyl methacrylate is 40 to 100% by mass based on the total amount of the alkyl methacrylate.

3. The viscosity index improver according to claim 1 or 2, wherein a proportion of methyl methacrylate in the alkyl methacrylate is 0 to 50% by mass based on the total amount of the alkyl methacrylate.

4. The viscosity index improver according to any one of claims 1 to 3, wherein a proportion of alkyl methacrylate having an alkyl group having 10 to 16 carbon atoms in the alkyl methacrylate is 0 to 40% by mass based on the total amount of the alkyl methacrylate.

5. The viscosity index improver according to any one of claims 1 to 4, wherein the arm part has a number average molecular weight of 10,000 to 60,000.

6. The viscosity index improver according to any one of claims 1 to 5, wherein the star polymer has a number average molecular weight of 50,000 to 1,000,000.

7. A lubricant oil additive comprising the viscosity index improver according to any one of claims 1 to 6.

8. A lubricant oil composition comprising a lubricating base oil and the viscosity index improver according to any one of claims 1 to 6.

9. The lubricant oil composition according to claim 8, wherein the lubricant oil composition has a HTHS viscosity of 1.4 mPa·s or greater at 150°C and a HTHS viscosity of less than 5.4 mPa·s at 100°C.
